# EUROPEAN PATENT SPECIFICATION

(11) **EP 0 801 099 B1**
(45) Date of publication and mention of the grant of the patent: **24.01.2001**
(21) Application number: 96200997.3
(22) Date of filing: 12.04.1996
(51) Int. Cl.: C08K 3/36, C08K 9/04, C09D 163/00, C09D 175/04

(54) **Preparation of a water soluble composition and use thereof in a water-based coating**
Herstellung einer wasserlöslichen Zusammensetzung und ihre Verwendung in einer Beschichtung auf Wasserbasis
Préparation d'une composition soluble dans l'eau et son utilisation dans une composition de revêtement aqueuse

(43) Date of publication of application: 15.10.1997
(73) Proprietor: EPX Holding SA, 6211 TE Maastricht (NL)
(72) Inventor: Haas, Godfried Maria Johannes Peter,, B-3621 Rekem (BE)
(74) Representative: de Bruijn, Leendert C.

(56) References cited:
- EP-A- 0 430 276
- EP-A- 0 543 228
- DE-A- 3 829 587
- DE-A- 4 217 509
- GB-A- 1 380 108
- INFORMATIONS CHIMIE, no. 371, September 1995, pages 85-88, XP000196351 A.ERANIAN ET AL.: "les silices greffées améliorent les revêtements"
- Rosato's Plastics Encyclopedia and Dictionary, p age 507, Hanser Publishers, 1993, New York.

## Description

The present invention relates to a process for the preparation of a water soluble composition comprising the reaction product of a polymer having optionally masked hydroxy groups and a curing reagent having substituents which are reactive towards said optionally masked hydroxy groups. The invention further relates to a water-based coating comprising said water soluble composition. In this description the expression "water soluble" does not only refer to true aqueous solutions, but also to substantial homogeneous aqueous mixtures such as dispersions and emulsions.

Coatings generally contain organic solvents which are released to the atmosphere during the drying of the coating. These emissions of organic solvents, which are referred to as volatile organic compounds (VOC), are detrimental to the environment and to health. In recent years regulations with respect to VOC have been the driving force to the development of new coating technologies such as high solid coatings, which still contain some organic solvent, and solvent-free powder coatings. For marine applications, however, powder coatings are only useful for coating small pieces of equipment which can be removed from the ship or the offshore structure as powder coated articles need to be dried in special ovens. High solid coatings based on epoxy resins or polyurethanes are therefore the most widely used marine coatings nowadays. However, these high solid coatings do still contain some organic solvent. Furthermore, due to the use of water as a solvent, the formulated coatings have relatively low solid contents. According to Kirk-Othmer, Encyclopedia of Chemical Technology, 4th Edition, Vol. 6, page 726 (1993), these solid contents are in the range of 18 to 25 vol.%. Additionally, during drying of the coating, water and the organic solvent evaporate. At high relative humidity release of water is slower than that of the organic solvent, which may lead to inconsistent rheological behaviour and film formation. Consequently, there is a need for coatings, in particular marine coatings, being completely free of organic solvents and having high solid contents and which afford an excellent rheological behaviour and film formation.

DE A 3.829.587 relates to a water based two-component coating composition containing a polyol component consisting of a hydroxy groups containing polymer of ethylenically unsaturated monomers, and a polyisocyanate component consisting of an organic polyisocyanate. According to page 2, lines 27 - 37 and page 2, line 66 - page 3, line 6 of DE A 3.829.587, the polyol component contains carboxylic and/or sulphonic acid groups and are particularly polyhydroxy acrylates wherein the hydroxy groups of the polyol component react with free isocyanate groups of the polyisocyanate component.

GB B 1.380.108 provides aqueous emulsions of epoxy resins by applying a particular emulsifying agent, said emulsifying agent being an ethylene oxide - propylene oxide block copolymer.

The present invention provides a solution for the problems mentioned above. The present invention provides a water soluble composition which does not contain any organic solvent. The water soluble composition according to the present invention is in particular suitable to be used in water-based coatings having high solid contents, which are harmless to the environment and safe in use and have excellent properties with respect to VOC, pot life, abrasion resistance, adherence and rheological behaviour. In addition, the viscosity of these water-based coatings comprising the water-based composition according to the invention is easily adjusted to the intended application by just diluting said water-based coatings with the necessary amount of water. Furthermore, cleaning of equipment used for applying the water-based coatings is very simple. The present invention therefore provides a process for the preparation of a water soluble composition comprising a reaction product of a polymer having optionally masked hydroxy groups and a curing reagent having substituents which are reactive towards said optionally masked hydroxy groups, characterised in that the polymer is reacted with the curing reagent in water in the presence of an organosol.

Optionally masked hydroxy groups are to be understood to comprise unprotected hydroxy groups, protected hydroxy groups which are relatively easily hydrolysable, e.g. particular ethers and esters, and masked hydroxy groups, e.g. epoxy groups. Curing reagents having substituents which are reactive towards such optionally masked hydroxy groups are well known in the art and examples of such reactive groups are isocyanate, amine and carboxylic groups.

Organosols are non-porous, amorphous spherical particles of silicium dioxide having a size of about 10 to about 50 nm and a specific surface area of about 50 to about 200 m²/g, said particles of siliciumdioxide being grafted with organic compounds such as 1,6-hexanediol diacrylate and 2-hydroxyethyl acrylate. The amount of grafting is about 2 to 3 per nm² of surface depending on the nature of the grafting reagent. The particles can be considered as particles of silicium dioxide having terminal hydroxy groups. A more detailed description of organosols can be found in A. Eranian and C. Roux, Informations Chimie nr. 371, September 1995, page 85.

Preferably, the optionally masked hydroxyl groups are epoxy or hydroxy groups. According to the invention the polymer is therefore preferably selected from polymers having optionally terminal epoxy or hydroxy groups.

In particular epoxy resins having terminal epoxy groups or polyols having terminal hydroxy groups are used. Examples of suitable epoxy resins are those based on diphenylol propane derivatives and epichlorohydrin. Examples of suitable polyols are polyester poyols, certain polyurethanes, alkyds, polyalkylene alcohols and polyether polyols. According to the invention the polymer is preferably selected from epoxy resins and polyols.

Suitable epoxy resins are bisphenol A epoxy resins, bisphenol F epoxy resins, epoxy phenol novolac resins and epoxy resins having aliphatic, cycloaliphatic, aromatic or heterocyclic backbones. An example of a polyalkylene alcohol is polyvinyl alcohol. Examples of polyester polyols are polyethylene terephtalate, polypropylene terephtalate, polyethylene adipate, copolymers of polyether polyols and terephtalic acid, and aliphatic polyester-polyurethanes having terminal hydroxy groups. Examples of polyether polyols are poly(ethylene glycol), poly(propylene glycol) and phenolic resins. According to the invention the epoxy resins are preferably selected from epoxy resins based on bisphenol A or F or mixtures thereof, polyester polyols which are selected from aliphatic polyester-polyurethanes having terminal hydroxy groups or polyether polyols which are selected from aliphatic polyether-polyurethanes having terminal hydroxy groups. The aliphatic polyester-polyurethanes having terminal hydroxy groups may be derived from aliphatic polyesterpolyols and aromatic or aliphatic diisocyanates, wherein aliphatic diisocyanates are preferred. The polyesterpolyols may be derived from e.g. adipic acid and a glycol such as ethylene glycol, propylene glycol and 1,4-butanediol, or from captolacton and a glycol. According to the invention polyester-polyurethanes of the type Bayhydrol can be used, in particular Bayhydrol LS 2156. The polyether-polyurethanes are, like the polyester-polyurethanes, preferably aliphatic, wherein the polyether component may be derived from propylene oxides, ethylene oxides or mixtures thereof.

According to the invention the epoxy resins preferably have an equivalent epoxy weight (EEW) of 150 to 220, in particular of 170 to 210.

According to the invention the polyester polyols have preferably according to DIN 53240 an OH-content of 2 to 4% wt., calculated on dry resin. The polyester polyols are preferably used as dispersions containing about 35-50% wt. of the resin, wherein the dispersions have a viscosity at 23°C of about 400 to about 600 mPa.s (DIN 53019), a pH of about 7 to 8 and an acidic index of about 25 to 30 (DIN 53402).

According to the invention the polyether polyols are preferably used as dispersions containing about 40-55% wt. of the resin and have an OH-content of about 2-4% wt., calculated on dry resin.

The polymers are reacted with the suitable curing reagents. For epoxy resins, amines, polyamines, oxyalkylated polyamines and polyaminoamides can be used. For polyols isocyanates can be used. According to the invention the curing reagents may have two terminal reactive groups or more, i.e. it may be a linear curing reagent having two terminal reactive groups wherein the reagent optionally is substituted by one or more substituents end-capped with the same reactive group, or it may be comprised by a central molecular structure having extending molecular chains which are terminated by the suitable reactive groups. Examples of such compounds are pentaerithrytol, (HO-CH₂-CH₂)₃N and (HO-CH₂-CH₂)₄Si and their amine counterparts, poly(isocyanatophenylmethylene). According to the invention the curing agent is preferably a compound having at least two terminal amino or isocyanate groups.

When an epoxy resin is used as the polymer, the curing reagent has preferably at least two terminal amino groups. Examples of compounds having at least two terminal amino groups are polyamines, e.g. diethylene triamine, triethylene tetraamine, tetraethylene pentamine, pentamethylene hexamines, cyclohexylenediamines, dipropylene triamine, and polyaminomamides, i.e. reaction products of polyamines and dibasic carboxylic acids. According to the invention the curing reagent having at least two terminal amino groups has an amino hydrogen equivalent weight (AHEW) of 70 to 110 and a viscosity at 25°C of 300 to 500 mPa.s. Most preferably the curing agent having terminal amino groups is dipropylene triamine or triethylene tetraamine.

When a polyester polyol or a polyether polyol is used as the polymer, the curing reagent has preferably at least two terminal isocyanate groups. Examples of compounds having at least two terminal isocyanate groups are toluylene diisocyanates (TDI), hexamethylene diisocyanate (HDI), bis(p-isocyanatophenyl)methane (MDI), 5-isocyanato-1-isocyanatomethyl-1,3,3-trimethylcyclohexane (isophorone diisocyanate: IPDI). According to the invention the curing agent having at least two terminal isocyanate groups is preferably hexamethylene diisocyanate (HDI), more preferably an aliphatic polyisocyanate based on HDI having a NCO-content of about 20-25% (DIN 53185) and a viscosity at 23°C of about 800-1400 mPa.s (DIN 53019/1) and containing less than 1% wt., preferably less than 0.5% wt. of monomeric isocyanate (DIN 55956). A very suitable curing agent is Desmodur LS 2025/1 which is commercialised by Bayer.

When an epoxy resin is reacted with a curing reagent having terminal amino groups, it is preferred according to the invention that the amount of the amine is between 0.8 and 1.5, preferably between 0.9 and 1.4 and most preferably between 1.0 *EEW/AHEW g amine/100 g epoxy resin and 1.2 *EEW/AHEW g amine/100 g epoxy resin.

When a polyol. e.g. a polyether polyol or a polyester polyol, is reacted with a reactant having terminal isocyanate groups, it is preferred according to the invention that the polyol is reacted with the diisocyanate in a weight ratio of 1.3 to 2.0, preferably of 1.5 to 1.7. Thus, preferably an excess of the curing agent is used.

According to the invention the polymer is reacted with a mixture of the curing reagent and the organosol. Various types of organosols are known, e.g. those which are grafted with propylene glycol, 1,5-pentanediol, 2-hydroxyethyl methacrylate, 1,6-hexamethylene diacrylate, tripropylene glycol, 2-(2-aminoethyl)ethanolamine and ethyleneglycol mono n-propyl ether. The organosol has preferably a silicon content of 45 to 55% wt., in particular about 50% wt., and a hydroxy index of 25-35 mg KOH/g. In particular the organosol PL 8264 B2 or OG 502, which are commercialised by Hoechst, France, is used. The organosol is used in an amount of up to 15 % wt., preferably in an amount of 10 % wt. to 13 % wt., calculated on the total weight of the polymer and the curing reagent. It will be clear to the skilled person that the organosol may also function as a curing agent.

It is further preferred that the preparation of the water soluble composition according to the invention is conducted in the presence of a surface active agent, in particular a non-ionic surface active agent. Well known examples of non-ionic surface active agents include ethoxylates and propoxylates.

According to the invention preferably non-ionic surface active agents are used which have a viscosity at 25°C of 10 to 15 mPa.s, most preferably of 8 to 12 mPa.s. The amount of the non-ionic surface active agent is preferably 1 to 7 % wt., most preferably 2 to 6 % wt., calculated on the total weight of the mixture of the polymer, the curing reagent and the organosol.

The process for the preparation of the water soluble composition according to the invention can be conducted under mild conditions. In general it is preferred to conduct the reaction at ambient temperature and atmospheric pressure.

The water soluble composition according to the invention comprises a polymer substituted by optionally masked hydroxy groups, a curing reagent having at least two substituents which are reactive towards said optionally masked hydroxy groups, and an organosol. As the organsol may have various hydroxy groups on its surface, more than one curing reagents can be linked to the organosol. Furthermore, if a curing reagent having more than two reactive groups is used, more than one organosol and/or polymers may be linked to the curing reagent. Consequently, a network of polymer molecules and organosol molecules may be obtained, wherein the polymers and/or the organosol molecules are linked via one or more curing reagent molecules. The structure of the water soluble composition according to the invention may therefore be described as that the organosol is linked to at least one curing reagent and said curing reagent is linked to at least one polymer and/or at least one organosol.

A second aspect of the invention is a water-based coating comprising the water soluble composition. According to the invention the water-based coating comprises 20 to 30 % wt. of water, preferably demineralised water, and 10 to 15 % wt. of the water soluble composition. If necessary or if desired the viscosity of the water-based coating can easily be adjusted by adding water, which may be relevant when the coating is applied by spraying.

The water-based coating according to the invention may further contain one or more polysiloxane resins to modify the gloss of the film which is obtained after drying and curing of the coating and to improve the thermal resistance of the film. Preferably the coating contains 8 to 12 % wt. of such resins.

The water-based coating according to the invention may also comprise one or more air release additives. Suitable examples of air release additives are dimethylpolysiloxane or comparable oligomers. According to the invention an air release additive is used which has a density at 20°C of about 0.85 to 0.95 g/ml, in particular of 0.87 to 0.90 g/ml, and a refractive index of about 1.41 to 1.45, in particular of 1.42 to 1.44. The air release additives are preferably used in amounts of 0.1 to 1.0 % wt., more preferably in amounts of 0.5 to 0.8 % wt., calculated on the total weight of the water-based coating.

The water-based coating according to the invention may also comprise one or more mineral fillers. Suitable mineral fillers are talc, quartz, and quartz mill having a particle size of about 50-80 µm, in particular about 60 µm. According to the invention these mineral fillers are added in amounts of 30 to 50 % wt., calculated on the total weight of the water-based coating.

The water-based coating according to the invention may also comprise one or more mineral pigments. Suitable mineral pigments are titanium dioxide and iron oxide. According to the invention these mineral pigments are added in amounts of 15 to 18 % wt., calculated on the total weight of the water-based coating.

The water-based coating according to the invention may further comprise one or more binders, colorants, corrosion inhibitors or other additives used in the art.

The water-based coating according to the invention is in particular suitable for heavy duty applications, e.g. ships and off-shore structures, but also floors and walls, e.g. concrete floors and walls, which are exposed to intensive use and which have to be cleaned very frequently. Such floors and walls may be found in hospitals, e.g. operation rooms, sports centres and swimming pools. The curing time of the water based-coating can further be easily adjusted by varying the amount of the curing reagent.

The water-based coatings according to the invention may be prepared prior to their use. Marine coatings for example are usually commercialised as multipackage systems, wherein the various components are mixed and optionally thinned as specified by the manufacturer for meeting specified times between mixing and application, times between multiple coates and pot-life limitations. The coatings according to the invention afford the possibility to prolonge the pot-life and the time between mixing and application.

### Example

In this example the preparation of a water-based coating is described. Components A and B are mixed at room temperature to form a stable dispersion. The constitution of components A and B are shown in Table 1.

**Table 1**

| Component A | % wt. |
|---|---|
| Curing agent (Anquamine 401) | 22 |
| Water (deionised and demineralised) | 28 |
| Defoaming agent (BYK-033) | 0,2 |
| Pigments | 24,6 |
| Fillers | 21,0 |
| Water (deionised) | 4,2 |

| Component B | |
|---|---|
| Epoxy resin XZ 9538100 of Dow Chemical | 25 |
| Water (deionised) | 8 |
| Organosol OG 502 of Hoechst | 17 |
| BYK A 530 | 0,1 |

## Claims

1. Process for the preparation of a water soluble composition wherein the composition does not contain any organic solvent and comprises the reaction product of a polymer having optionally masked hydroxy groups and a curing reagent having substituents which are reactive towards said optionally masked hydroxy groups, wherein the water soluble composition encompasses aqueous solutions and dispersions and emulsions, characterised in that the polymer is reacted with the curing reagent in water in the presence of an organosol, the organosol being non-porous, amorphous spherical particles of silicium dioxide having terminal hydroxy groups and having a hydroxy index of 25-35 mg KOH/g, a size of 10 to 50 nm, a specific surface area of 50 to 200 m²/g and being grafted with organic compounds wherein the amount of grafting is 2 to 3 per nm² of surface.

2. Process according to claim 1, wherein the polymer is selected from polymers having terminal epoxy groups.

3. Process according to claim 2, wherein the polymer is selected from epoxy resins, in particular from bisphenol A epoxy resins, bisphenol F epoxy resins and mixtures thereof, and wherein the epoxy resins have an equivalent epoxy weight (EEW) of 150 to 220.

4. Process according to claim 1, wherein the polymer is selected from polymers having terminal hydroxy groups.

5. Process according to claim 4, wherein the polymer is selected from polyester polyols and polyether polyols having an OH-content of 2 to 4% wt..

6. Process according to any one of claims 1-3, wherein the curing reagent is a compound having at least two terminal amino groups, in particular those having an amino hydrogen equivalent weight (AHEW) of 70 to 110 and a viscosity at 25°C of 300 to 500 mPa.s..

7. Process according to claim 6, wherein the amount of the curing reagent having at least two terminal amino groups is between 0.8*EEW/AHEW g amine/100 g epoxy resin and 1.5 *EEW/AHEW g amine/100 g epoxy resin.

8. Process according to claims 4 or 5, wherein the curing agent is a compound having at least two terminal isocyanate groups and wherein the polyol is reacted with the curing reagent having terminal isocyanate groups in a weight ratio of 1.3 to 2.0.

9. Process according to any one of claims 1-8, wherein the polymer is reacted with a mixture comprising the reagent and the organosol in an amount up to 15 % wt. of the organosol calculated on the total weight of the polymer and the curing reagent.

10. Process according to claim 1, wherein the preparation is carried out in the presence of a surfactant, in particular a non-ionic surface active agent, preferably a non-ionic surface active agent having a viscosity at 25°C of 10 to 15 mPa.s.

11. Process according to claim 10, wherein the preparation is carried out in the presence of 1 to 7 % wt. of a non-ionic surface active agent, calculated on the total weight of the mixture of the polymer, the curing reagent and the organosol.

12. Water soluble composition which does not contain any organic solvent, wherein the water soluble composition encompasses aqueous solutions anddispersions and emulsions, the composition being obtainable according to the process of claims 1-11.

13. Water soluble composition which does not contain any organic solvent, wherein the water soluble composition encompasses aqueous solutions anddispersions and emulsions, the composition comprising a polymer substituted by optionally masked hydroxy groups, a curing reagent having at least two substituents which are reactive towards said optionally masked hydroxy groups, and an organosol, wherein the organosol is linked to at least one curing reagent and said curing reagent is linked to at least one polymer and/or at least one organosol, the organosol being non-porous, amorphous spherical particles of silicium dioxide having terminal hydroxy groups and having a hydroxy index of 25-35 mg KOH/g, a size of 10 to 50 nm, a specific surface area of 50 to 200 m²/g and being grafted with organic compounds wherein the amount of grafting is 2 to 3 per nm² of surface.

14. Water-based coating comprising 20 to 30 % wt. of water and 10 to 15 % wt. of the water soluble composition according to claim 12 or 13.

## Patentansprüche

1. Verfahren zur Herstellung einer wasserlöslichen Zusammensetzung, wobei die Zusammensetzung kein organisches Lösungsmittel enthält und das Reaktionsprodukt eines Polymers mit gegebenenfalls maskierten Hydroxyresten und ein Härtungsreagenz mit Substituenten umfaßt, welche reaktiv gegenüber den gegebenenfalls maskierten Hydroxyresten sind, wobei die wasserlösliche Zusammensetzung wäßrige Lösungen und Dispersionen und Emulsionen umfaßt, dadurch gekennzeichnet, daß das Polymer mit dem Härtungsreagenz in Wasser in Gegenwart eines Organosols umgesetzt wird, wobei das Organosol nichtporöse, amorphe, sphärische Siliziumdioxidteilchen mit terminalen Hydroxyresten und mit einem Hydroxyindex von 25-35 mg KOH/g, einer Größe von 10 bis 50 nm, einer spezifischen Oberflächenfläche von 50 bis 200 m²/g sind und mit organischen Verbindungen gepfropft ist, wobei die Pfropfungsmenge 2 bis 3 pro nm² Oberfläche beträgt.

2. Verfahren nach Anspruch 1, wobei das Polymer aus Polymeren mit terminalen Epoxidresten ausgewählt ist.

3. Verfahren nach Anspruch 2, wobei das Polymer aus Epoxidharzen, insbesondere aus Bisphenol A-Epoxidharzen, Bisphenol F-Epoxidharzen und Gemischen davon ausgewählt ist, und wobei die Epoxidharze ein Epoxidequivalentgewicht (EEW) von 150 bis 220 haben.

4. Verfahren nach Anspruch 1, wobei das Polymer aus Polymeren mit terminalen Hydroxyresten ausgewählt ist.

5. Verfahren nach Anspruch 4, wobei das Polymer aus Polyesterpolyolen und Polyetherpolyolen mit einem OH-Gehalt-von 2 bis 4 Gew.-% ausgewählt ist.

6. Verfahren nach einem der Ansprüche 1-3, wobei das Härtungsreagenz eine Verbindung mit wenigstens zwei terminalen Aminoresten, insbesondere solchen mit einem Aminohydrogenequivalentgewicht (AHEW) von 70 bis 110 und mit einer Viskosität von 300 bis 500 mPa*s bei 25°C ist.

7. Verfahren nach Anspruch 6, wobei die Menge des Härtungsreagenzes mit wenigstens zwei terminalen Aminoresten zwischen 0,8*EEW/AHEW g Amin/100 g Epoxidharz und 1,5*EEW/AHEW g Amin/100 g Epoxidharz liegt.

8. Verfahren nach Anspruch 4 oder 5, wobei das Härtungsmittel eine Verbindung mit wenigstens zwei terminalen Isocyanatresten ist, und wobei das Polyol mit dem Härtungsreagenz mit terminalen Isocyanatresten in einem Gewichtsverhältnis von 1,3 bis 2,0 umgesetzt wird.

9. Verfahren nach einem der Ansprüche 1-8, wobei das Polymer mit einem Gemisch umgesetzt wird, umfassend das Reagenz und das Organosol in einer Menge von bis zu 15 Gew.-% des Organosols, berechnet aus dem Gesamtgewicht des Polymers und des Härtungsreagenzes.

10. Verfahren nach Anspruch 1, wobei die Herstellung in Gegenwart eines oberflächenaktiven Mittels, insbesondere eines nichtionischen oberflächenaktiven Mittels, vorzugsweise eines nichtionischen oberflächenaktiven Mittels mit einer Viskosität von 10 bis 15 mPa*s bei 25°C durchgeführt wird.

11. Verfahren nach Anspruch 10, wobei die Herstellung in Gegenwart von 1 bis 7 Gew.-% eines nichtionischen oberflächenaktiven Mittels, berechnet aus dem Gesamtgewicht des Gemisches des Polymers, des Härtungsreagenzes und des Organosols, durchgeführt wird.

12. Wasserlösliche Zusammensetzung, welche kein organisches Lösungsmittel enthält, wobei die wasserlösliche Zusammensetzung wäßrige Lösungen und Dispersionen und Emulsionen umfaßt, wobei die Zusammensetzung nach dem Verfahren der Ansprüche 1-11 erhältlich ist.

13. Wasserlösliche Zusammensetzung, welche kein organisches Lösungsmittel enthält, wobei die wasserlösliche Zusammensetzung wäßrige Lösungen und Dispersionen und Emulsionen umfaßt, wobei die Zusammensetzung ein Polymer, substituiert mit gegebenenfalls maskierten Hydroxyresten, ein Härtungsreagenz mit wenigstens zwei Substituenten, welche reaktiv gegenüber den gegebenenfalls maskierten Hydroxyresten sind, und ein Organosol umfaßt, wobei das Organosol mit wenigstens einem Härtungsreagenz verbunden ist und das Härtungsreagenz mit wenigstens einem Polymer und/oder wenigstens einem Organosol verbunden ist, wobei das Organosol nichtporöse, amorphe, sphärische Siliziumdioxidteilchen mit terminalen Hydroxyresten und mit einem Hydroxyindex von 25-35 mg KOH/g, einer Größe von 10 bis 50 nm, einer spezifischen Oberflächenfläche von 50 bis 200 m²/g sind und mit organischen Verbindungen gepfropft ist, wobei die Pfropfungsmenge 2 bis 3 pro nm² Oberfläche beträgt.

14. Beschichtung auf Wasserbasis, umfassend 20 bis 30 Gew.-% Wasser und 10 bis 15 Gew.-% der wasserlöslichen Zusammensetzung nach Anspruch 12 oder 13.

## Revendications

1. Procédé pour la préparation d'une composition soluble dans l'eau dans lequel la composition ne contient aucun solvant organique et comprend le produit de la réaction entre un polymère ayant des groupes hydroxy éventuellement masqués et un réactif de durcissement ayant des substituants qui sont réactifs avec lesdits groupes hydroxy éventuellement masqués, dans lequel la composition soluble dans l'eau englobe les solutions aqueuses, les dispersions aqueuses et les émulsions aqueuses, caractérisé en ce que le polymère est mis à réagir avec le réactif de durcissement dans l'eau en présence d'un organosol, l'organosol consistant en particules sphériques amorphes, non poreuses, de dioxyde de silicium ayant des groupes hydroxy terminaux et ayant un indice d'hydroxyle de 25-35 mg de KOH/g, une taille de 10 à 50 nm, une surface spécifique de 50 à 200 m²/g et étant greffées avec des composés organiques où la quantité de greffage est de 2 à 3 par nm² de surface.

2. Procédé selon la revendication 1, dans lequel le polymère est choisi parmi les polymères ayant des groupes époxy terminaux.

3. Procédé selon la revendication 2, dans lequel le polymère est choisi parmi les résines époxydes, en particulier parmi les résines époxydes de bisphénol A, les résines époxydes de bisphénol F et leurs mélanges, et dans lequel les résines époxydes ont un poids d'équivalent époxyde (EEW) de 150 à 220.

4. Procédé selon la revendication 1, dans lequel le polymère est choisi parmi les polymères ayant des groupes hydroxy terminaux.

5. Procédé selon la revendication 4, dans lequel le polymère est choisi parmi les polyols polyesters et les polyols polyéthers ayant une teneur en OH de 2 à 4% en poids.

6. Procédé selon l'une quelconque des revendications 1 à 3, dans lequel le réactif de durcissement est un composé ayant au moins deux groupes amino terminaux, en particulier ceux ayant un poids d'équivalent amino hydrogène (AHEW) de 70 à 110 et une viscosité à 25°C de 300 à 500 mPa.s.

7. Procédé selon la revendication 6, dans lequel la quantité du réactif de durcissement ayant au moins deux groupes amino terminaux est comprise entre 0,8 *EEW/AHEW g d'amine/100 g de résine époxyde et 1,5 *EEW/AHEW g d'amine/100 g de résine époxyde.

8. Procédé selon les revendications 4 ou 5, dans lequel l'agent de durcissement est un composé ayant au moins deux groupes isocyanate terminaux et dans lequel le polyol est mis à réagir avec le réactif de durcissement ayant des groupes isocyanate terminaux dans un rapport pondéral de 1,3 à 2,0.

9. Procédé selon l'une quelconque des revendications 1 à 8, dans lequel le polymère est mis à réagir avec un mélange comprenant le réactif et l'organosol en une quantité allant jusqu'à 15% en poids de l'organosol calculée par rapport au poids total du polymère et du réactif de durcissement.

10. Procédé selon la revendication 1, dans lequel la préparation est effectuée en présence d'un tensioactif, en particulier un agent tensioactif non ionique, de préférence un agent tensioactif non ionique ayant une viscosité à 25°C de 10 à 15 mPa.s.

11. Procédé selon la revendication 10, dans lequel la préparation est effectuée en présence de 1 à 7% en poids d'un agent tensioactif non ionique, calculé par rapport au poids total du mélange du polymère, du réactif de durcissement et de l'organosol.

12. Composition soluble dans l'eau qui ne contient aucun solvant organique, où la composition soluble dans l'eau englobe les solutions aqueuses, les dispersions aqueuses et les émulsions aqueuses, la composition pouvant être obtenue suivant le procédé des revendications 1 à 11.

13. Composition soluble dans l'eau qui ne contient aucun solvant organique, où la composition soluble dans l'eau englobe les solutions aqueuses, les dispersions aqueuses et les émulsions aqueuses, la composition comprenant un polymère substitué par des groupes hydroxy éventuellement masqués, un réactif de durcissement ayant au moins deux substituants qui sont réactifs avec lesdits groupes hydroxy éventuellement masqués, et un organosol, dans laquelle l'organosol est lié à au moins un réactif de durcissement et ledit réactif de durcissement est lié à au moins un polymère et/ou au moins un organosol, l'organosol consistant en particules sphériques amorphes, non poreuses, de dioxyde de silicium ayant des groupes hydroxy terminaux et ayant un indice d'hydroxyle de 25-35 mg de KOH/g, une taille de 10 à 50 nm, une surface spécifique de 50 à 200 m²/g et étant greffées avec des composés organiques où la quantité de greffage est de 2 à 3 par nm² de surface.

14. Revêtement à base aqueuse comprenant 20 à 30% en poids d'eau et 10 à 15% en poids de la composition soluble dans l'eau selon la revendication 12 ou 13.
